# EUROPEAN PATENT SPECIFICATION

(11) **EP 2 035 206 B1**
(45) Date of publication and mention of the grant of the patent: **25.05.2016**
(21) Application number: 06747956.8
(22) Date of filing: 21.06.2006
(51) Int. Cl.: B29C 45/16, B29C 45/26, B29C 45/47

(54) **METHOD FOR INJECTION MOULDING OF PRODUCTS IN THERMOPLAST WITH STEPWISE OPENING OF DIFFERENT PARTS OF THE MOULD CAVITY, AND TOOL FOR PRACTIZING THE METHOD**
VERFAHREN ZUM SPRITZGIESSEN VON PRODUKTEN AUS THERMOPLAST MIT SCHRITTWEISEM ÖFFNEN VON VERSCHIEDENEN TEILEN DES FORMWERKZEUGHOLRAUMS UND WERKZEUG ZUR AUSÜBUNG DES VERFAHRENS
PROCÉDÉ DE MOULAGE PAR INJECTION DE PRODUITS EN MATIÈRE THERMOPLASTIQUE AVEC OUVERTURE PAR ÉTAGES DE DIFFÉRENTES PARTIES DE LA CAVITÉ DU MOULE, ET OUTIL PERMETTANT D'UTILISER LE PROCÉDÉ

(43) Date of publication of application: 18.03.2009
(73) Proprietor: Flexiject Co-Injection AB, 441 56 Alingsås (SE)
(72) Inventor: KARLSSON, Lennart, 441 57 Alingsås (SE)
(74) Representative: Valea AB
(86) International application number: PCT/SE2006/000768
(87) International publication number: WO 2007/149021

(56) References cited:
- EP-A1- 0 949 053
- EP-A1- 0 949 053
- DE-A1- 3 711 079
- FR-A1- 2 765 139
- JP-A- H1 052 835
- SE-C2- 528 458
- SE-C2- 528 458
- US-A- 4 980 115

## Description

### AREA OF THE INVENTION

The present invention relates to injection moulding of products in thermoplast and refers a new tool and process technique, which permits stepwise opening of different parts of the mould chamber. The invention incorporates 4 different partial concepts for injection moulding of:
- multi-layer products in two steps according to the "co-injection" method
- single material products in two steps according to the "co-injection" method or conventionally
- multi-layer or single material products in accordance with the above with a slot as tear notch
- cellular products in two steps with expanding material.

### BACKGROUND OF THE INVENTION

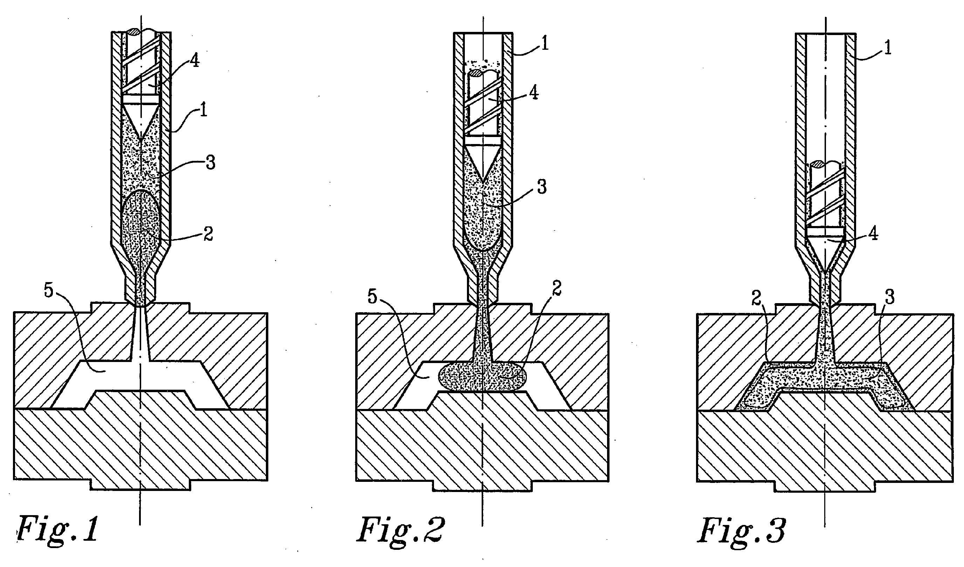

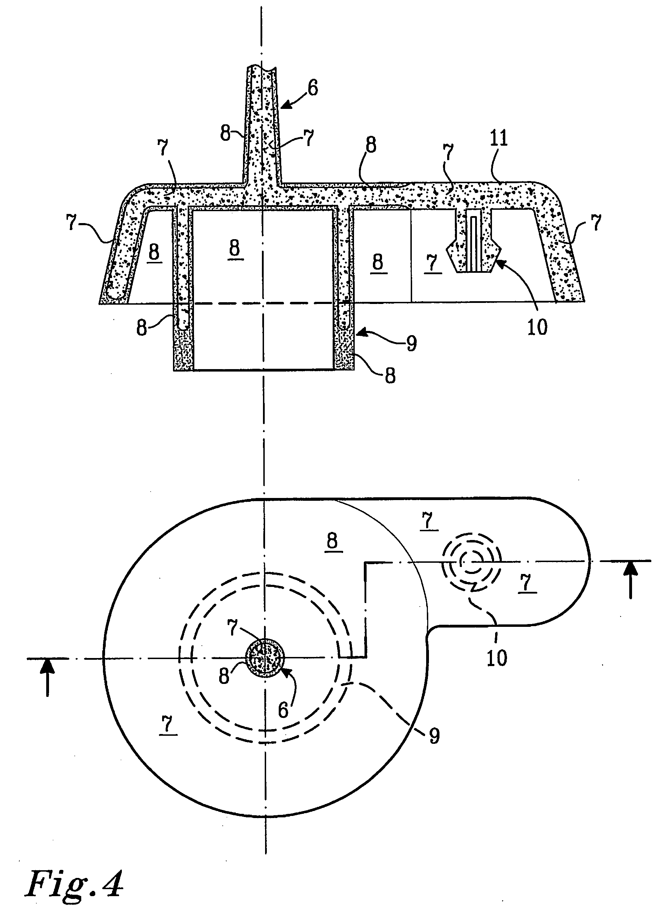

In the attached Figs. 1 - 3 will be schematically illustrated the "mono-sandwich method", one of the known methods for multi-layer injection moulding according to the so called "sandwich" or "co-injection" method, and in Figs. 4- 5 examples of the problems, which will arise when these methods are used for complex products, which for instance have flow paths for the melt of substantially different lengths, different thickness of material in different parts of the product and different obstacles/disturbances for the flow front of the melt in the mould chamber.

At injection moulding of multi-layer products in accordance with anyone of the known "co-injection" methods, it is usually desired that all parts of the product shall have a cross section with a comparatively thin surface layer of one surface material and a thicker inner layer of a core material. In Fig. 1 is shown how the "mono-sandwich method" is utilized, whereby in the injection unit 1 is has been metered a melt volume 2 intended to form a thin surface layer, and positioned closest to the orifice of the injection unit, and with a second melt volume 3 metered there behind, intended to form the core material. As the screw piston 4 in the injection unit begins its stroke, in accordance with Fig. 2, the surface material will first be injected into the mould 5, whereby a comparatively thin layer of the surface material will solidify against the comparatively cold walls of the mould chamber. When the surface material 2 has been completely or partly injected in the mould chamber 5 and the screw piston 4 continues making its stroke, the core material 3 will penetrate into the surface material 2 and press this against the walls of the mould chamber 5, at the same time as the core material in accordance with Fig. 3 fills the mould chamber inside the surface material layer. In this manner is obtained a two-layered injection moulded product with a thin surface layer and continuous core layer encapsulated therein and having a thickness, which is substantially bigger than the thickness of the surface layer. Optimal distribution surface material in relation to core material is about 25/75 %. When using conventional moulding tools at injection moulding of multi-layer products according to the "co-injection" method, this distribution is achieved only if the products have comparatively simple and symmetrical shapes, such as the product in the mould chamber according to Figs. 1 - 3.

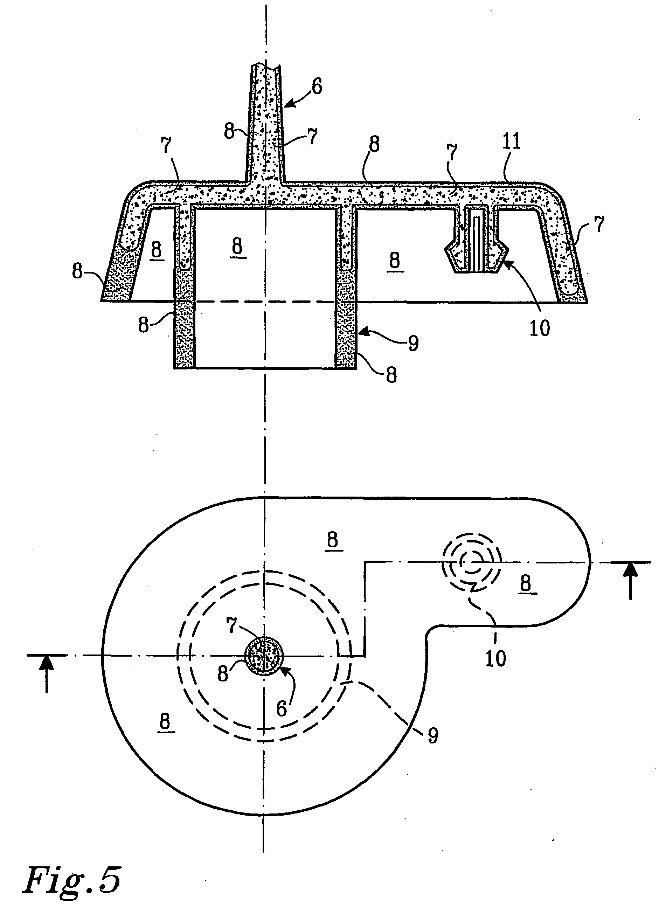

At products having complex form, as in the example according to Figs. 4 and 5, where there are essential differences in flow paths in different directions from the melt intake bushing 6 to the outer contour of the mould chamber, for instance according to the embodiment shown in Fig. 4, and/or different material thicknesses, and/or obstacles in the flow paths in form of e.g. tool cores in the mould chamber, it is received different flow resistance for the multi-layer melt in different flow paths in the mould chamber, which results in difficulties at multi-layer injection moulding with conventional tools. In the parts of the mould chamber of the product where the flow paths for the melt are substantially longer than the flow paths for other parts of the mould chamber, it is obtained, at an optimal metering 25/75 % of surface and core materials, respectively, usually only core material 7 in the cross section at the end of the flow paths, which can be seen at the right hand side of the product according to Fig. 4, which at the top shows the product in a section along the line A-A in the lower part of the figure. The core material melt 7 then has penetrated through the surface material 8 at the flow front.

By overdosing the surface material melt it is possible to obtain a multi-layer structure also in the parts of the mould chamber, which have the longest flow paths, but as can be seen in Fig. 5 in this case a too large amount of the surface material 8 is obtained at the end of the shorter flow paths, which means that the core material will not reach the outer contour of the mould chamber at these positions.

Furthermore there will be "disturbances" in the filling procedure for the flow front of the multi-layer melt, when this shall pass the openings for connections, such as reinforcements 9, attachment means 10 etcetera of a complex product, which means that the optimal distribution 25/75 % between surface and core materials usually can not be maintained, whereby break through of core material and excess of the surface material respectively are obtained at undesired positions of the connections, such as can be seen from Fig. 4, which as an example shows a normal portion of core material in the reinforcements 9 and only core material in the snap-action attachment 10. In Fig. 5 the reinforcement has a too large portion of surface material and the snap-action member 10 a more normal distribution.

The technical limitations in accordance with the above is one of the reasons for that the multi-layer injection moulding in accordance with the earlier known "co-injection" methods has not reached the market share, which was expected at the introduction thereof on the market many decades earlier.

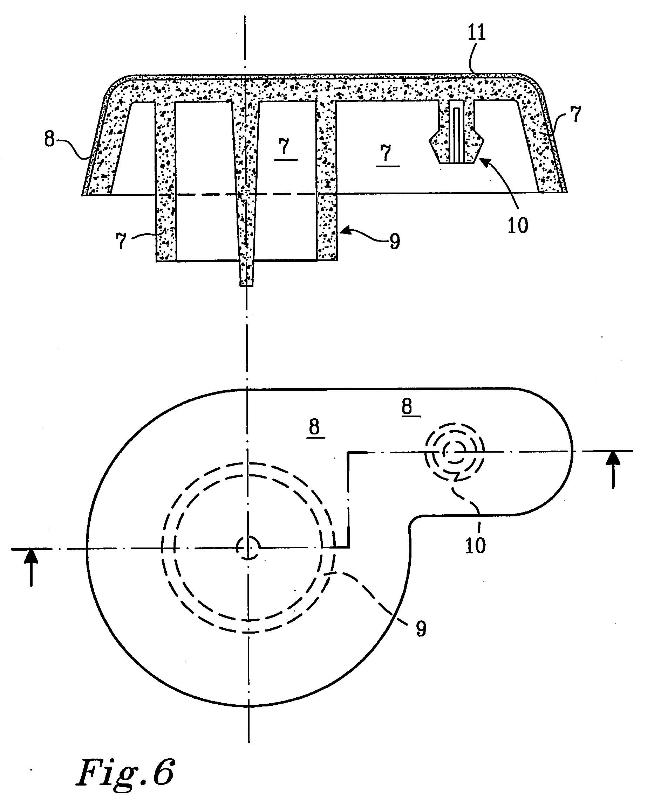

Multi-layer injection moulding in accordance with the over-moulding method, in daily talk referred to as "double moulding", is instead used in many cases for injection moulding multi-layer products of complex design. Fig. 6 shows the product example according to Figs. 4 and 5, injection moulded according to the over-moulding method. With this method is first injected a material 7, which forms the rear part of the product upper portion 11, and the connections 9 and 10, whereupon over-moulding with a surface layer material 8 takes place. The surface layer in this case will cover the outer side of the upper portion 11 of the product. However this method means substantially higher investments in machines and tools and often also a longer cycle time.

For injection moulded products such as panels, covers, caps, knobs, handles etcetera, there are generally big demands on the properties of the outer surface and on the surface layer, such as high finish, especial features (e.g. UV and heat resistance), good form accuracy, freedom from sinking, etcetera. This means that the upper part usually must be injection moulded from qualified, more expensive materials. The rear, usually not visible, lower side of the upper part, has commonly no particular demands with reference to the finish of the surface, and marks after cores and ejectors are for instance often permitted. Connections, such as reinforcements, attachments, etcetera for the upper part often have only demands for good mechanical properties, such as toughness and rigidity, which means that they in many instances could be injection moulded from a substantially less expensive material than the material for the upper part.

However, this type of products is often injection moulded as 1-component products in conventional moulding tools with a more expensive plastic material, which has been chosen in order to fulfil the demands for the upper part, and which are often overqualified for the connections. The material cost for the product therefore is high.

EP 0 949 053 discloses multi-layer products, such as vehicle panels, provided with one external skin layer and one internal core layer which are molded by co-injection i.e. injecting external material through a first plurality of points of injection and injecting the core material through a second plurality of points of injection, the points and nozzles of injection of one material being physically distinct from those of the other material.

The purpose of the present invention is to offer a method, which incorporates a process and a tool for multi-layer injection moulding, by which the limitations mentioned above for the known "co-injection" methods at injection moulding with conventional methods and tools, have been eliminated or considerably reduced, at the same time as it has been possible to improve the quality of the product and to reduce the material cost, and this has been achieved by means of the characteristics defined in claims 1 and 8.

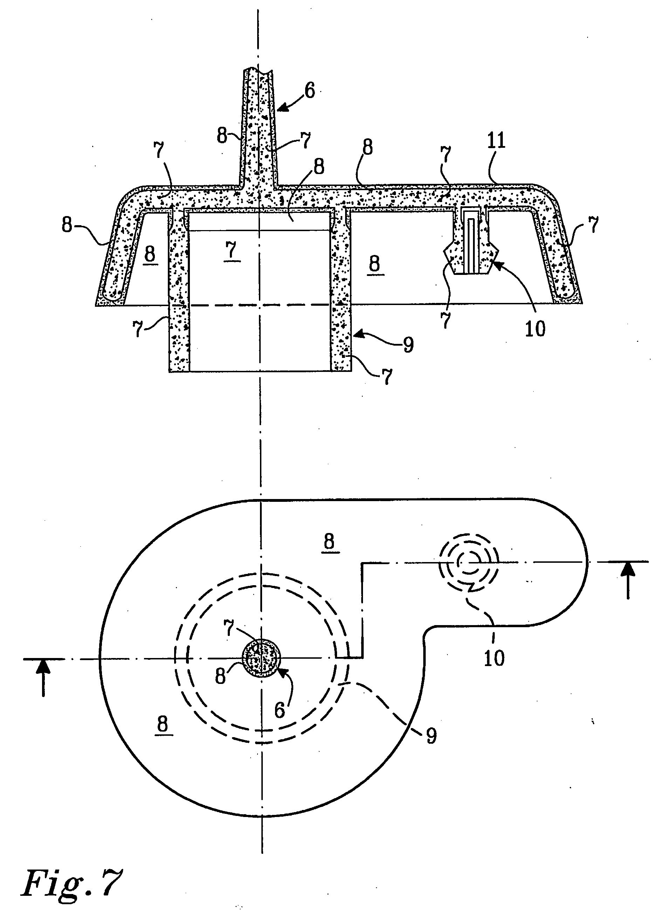

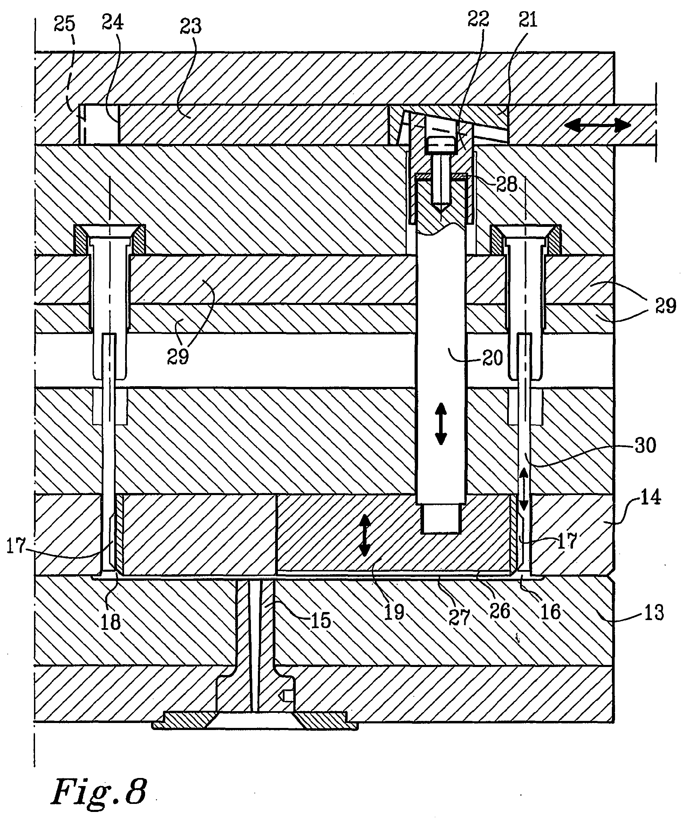

Injection moulding of multi-layer products in two steps in accordance with the "co-injection" method and with the process/ tool technique according to the invention, is the basic concept on which also the other partial concept are based upon, and for that reason this technique first will be described hereinafter with reference to products and tool equipments, which are shown in Figs. 7 to 23 of the accompanying drawings.

### THE BASIC CONCEPT. PRODUCTS

Fig. 7 shows in cross section and in a view from the outer surface of the upper part a product corresponding to that shown In Figs 4 - 6, but injection moulded with a process and moulding tool technique according to the invention. The product is typical for the method and it is characterized in that it has an upper part 11, often with a visible surface with high technical demands, and connections to the upper part, such as reinforcements 9 and attachments 10, which have been further described above. At those typical products injection moulded with the moulding tool technique and process according to the basic concept of the invention, the upper part will be injection moulded in several layers and it will hereby consist of on one hand a thin layer of the surface material all around the upper part, which amounts to about 25% of its total volume, and on the other hand an inner, thicker layer of the core material, which fills out the remaining volume without breaking through the surface material, and that the connections will consist of the core material only.

Fig. 7 shows the product example in an embodiment which has been injection moulded with the method according to the invention. In this case, the more expensive and regarding technical properties, more qualified surface layer material 8, is positioned along the entire outer and rearward surface of the upper part 11. The rest of the product consists of the less expensive core material 7. The upper part and the connections, respectively, at injection moulding of this product with the method according to the invention, can be given features, which are considerably different from each other. Injection moulding with tools according to the invention therefore can be used for a larger number of different types of product compared to what has earlier been possible with multi-layer injection moulding in conventional moulding tools with the earlier known alternatives of the "co-injection" method.

### THE BASIC CONCEPT. THE MOULDING TOOL.

Figs. 8 and 9 show cross sections from different angles of a moulding tool. Fig. 10 is a view of the parting of the moulding tool of the so called movable half of the tool. Fig. 11 is a view in bigger scale of a portion of the moulding tool shown in Figs. 8 - 10.

A moulding tool according to the invention is intended for multi-layer injection moulding of a product, which is somewhat simpler than the produce which is shown in Fig. 7, and this tool is schematically shown in Figs. 8 - 10. The tool incorporates a fixed tool half 13, a movable tool half 14, a melt intake bushing 15, which leads in to the mould chamber 16 of the upper part. The mould cavities 17 for the connections are made as movable plunges, hereinafter referred to as connection plunges 30. The mould cavities 17 communicate with the mould chamber 16 of the upper part via the openings/flow channels 18, which during the process can be adjusted between heavily restricted and entirely open positions in that the connection plunges 30 are positioned in the rearmost and forward end positions respectively, 33 and 34, in accordance with Fig. 11.

So called mould pressure cores 19, with a shaping surface of a certain size and outer contour, are movable inwardly in the mould chamber 16 by means of rods 20, which are acted upon by means of plate/prong 23, which is moveable in the transverse direction of the tool by means of a not shown driving device. In the plate/prong is mounted inserts 21 provided with a sloping plane, which slide against corresponding sloping planes at the end of feet 22, which are mounted on the rods 20. The plate/prong 23 is shown in an initial position 24, which corresponds to the initial positions 26 of the mould pressure cores in the mould chamber. The initial positions 26 of the mould pressure cores are individually and continuously adjustable by means of exchangeable washers 28 of eligible thickness positioned between the feet 22 and the rods 20.

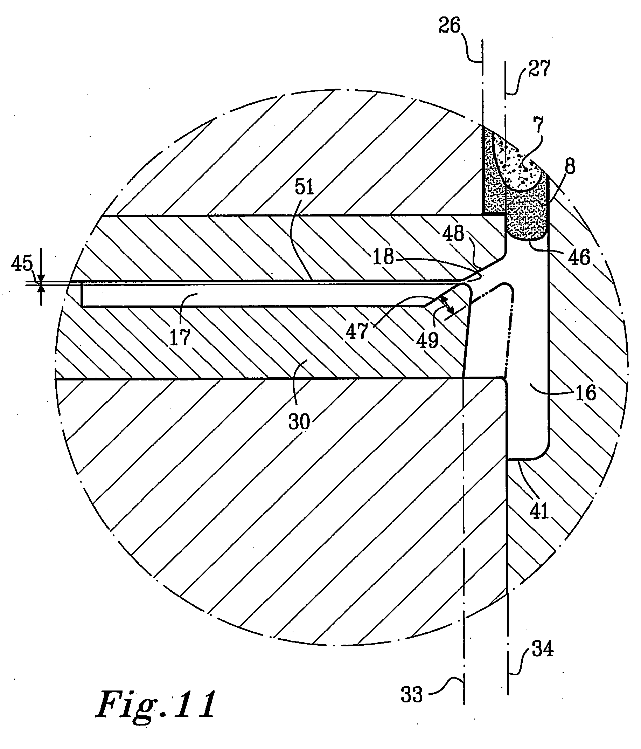

The adjustment of the initial positions 26 is determined of which distance between the mould walls, and thereby which flow resistance for the melt, which is wanted at the flow thereof along the shaping surfaces of the mould pressure cores. When the plate/prong 23, by means of the driving device, is pushed in a direction towards its end position 25, the rods 20 and the mould pressure cores 19 move inwardly in the mould chamber 16 of the upper part. When the plate/prong reaches its end position 25 the mould pressure cores have simultaneously reached their end positions 27, which usually corresponds to the positions which will give the upper part of the product its material thickness(es) in accordance with the drawing. During the filling procedure for the mould chamber of the upper part there is thus an excess of melt corresponding to the differences in distance in the initial positions 26 and the end positions 27. See Fig. 11.

Furthermore the tool incorporates an ejector plate stack 29, which supports the connection plunges 30, which means that they, at ejection of the product from the tool, move in parallel and simultaneously with the ejectors. Hereby is obtained an uncovering of the undercut which the product has at the openings/flow chanells 18, and which are necessary for the stripping of the product.

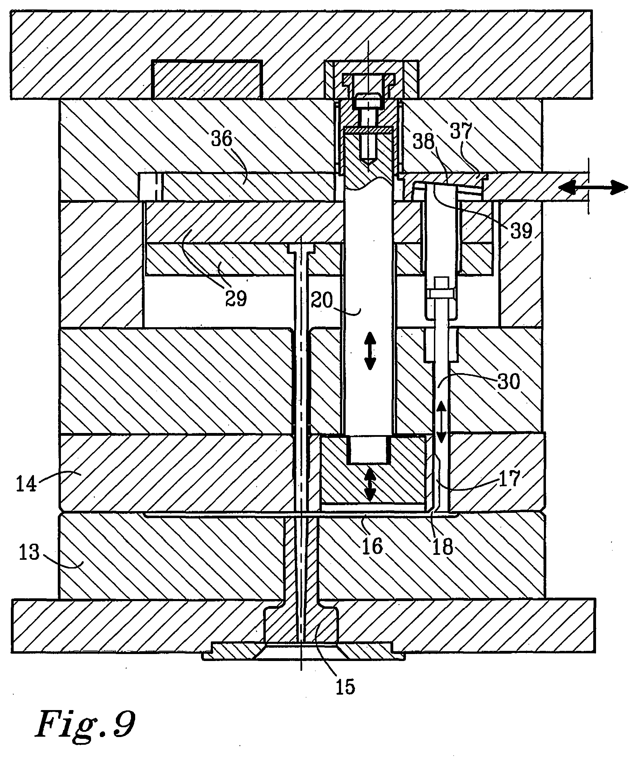

As can be seen from Fig. 9 the connection plunges 30 communicate with a plate/prong 36, which is displaceable in the transverse direction of the tool, and which is mounted on the rear side of the ejector plate stack 29, which in turn is connected to a not shown driving device. The transfer of the motion and power of the driving device to the connection plunges is effected in the same manner as for the mould pressure cores, i.e. via inserts 37 mounted in the plate/prong 36 and having sloping planes 39, which slide against corresponding sloping planes at feet 38, which are mounted on the connection plunges 30. The connection plunges makes during the process according to the invention a short motion, from the initial position 33 to the end position 34, see Fig. 11, inwardly in the upper part of the mould chamber 16.

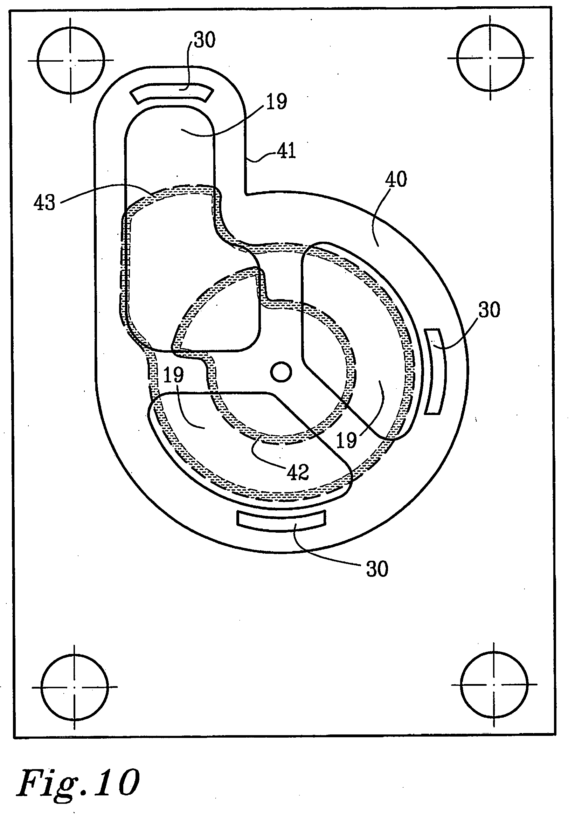

Fig. 10 shows a view from the parting of the tool half 14 with shaping surfaces of the mould pressure cores 19 and the connection plunges 30, and other mould surfaces 40. The outer contour of the product with reference to the shaping surfaces in the parting for this tool half is given the reference number 41. Schematic contours of the flow front of the melt in different moments of the mould filling procedure for the mould chamber of the upper part are given the reference numbers 42 and 43 respectively.

In Fig. 11 is shown in bigger scale a portion of the tool according to the invention with a mould cavity 17, provided in the front part of a connection plunge 30, in which a connection is formed at the injection moulding. The connection plunge 30 is here positioned in its rearmost position 33, and for this reason the flow channel 18 between the mould cavity 17 and the mould chamber 16 of the upper part is heavily restricted 45. In the drawing figure the opened position for the flow channel 18 has been drawn with dash and dot lines. In the mould chamber 16 of the upper part with its outer contour 41, there is shown a flow front 46 consisting of the surface material melt 8, whereas further rearward in the multi-layer melt there is a layer of core material melt 7. The forward part of the connection plunge 30 is provided with a chamfer 47 and the opposed fixed surface 51 has a corresponding chamfer 48, which means that the biggest cross section of the opening/flow path 18 is obtained when the connection plunge 30 has moved from position 33 to position 34 in accordance with the drawing figure.

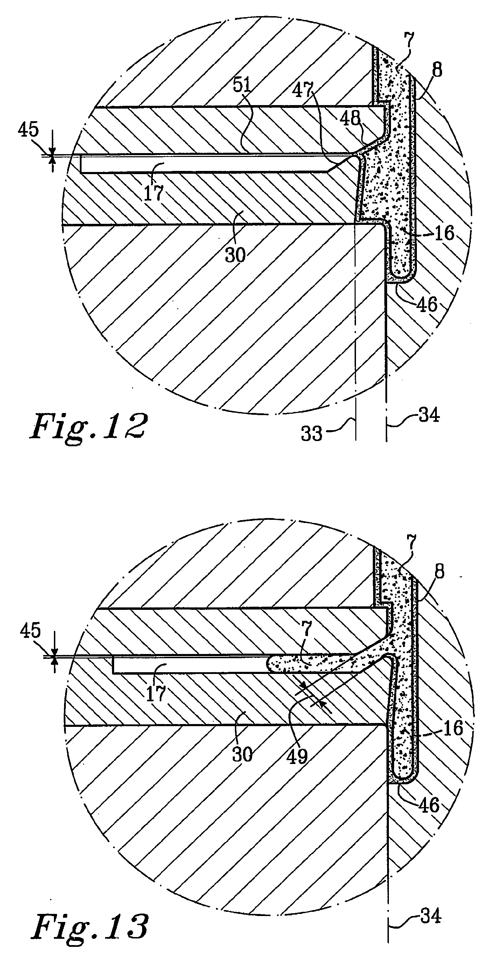

Figs. 12 and 13 show in smaller scale the same portion as that in Fig. 11, whereby the connection plunge 30 first in Fig. 12 is situated in the same position as in Fig. 11, whereas the flow front 46 has filled out the entire mould chamber 16 for the upper part. In this position for the connection plunge 30 melt is however not flowing into the mould cavity 17, as the plunge together with the fixed opposite surface 51 forms the heavy restriction 45.

In the next step, according to Fig. 13 the driving of the connection plunge 30 has displaced the plunge to its forward end position 34, where the opening/flow channel 18 to the mould cavity 17 has got its maximum cross section 49, whereby the melt of core material 7 penetrates the surface layer 8 and runs into the mould cavity.

The moments for the start and stop of the motions of the mould pressure cores and the connection plunges and their speeds and pressures against the melt can be differentiated for separate cores or groups of cores in that several separate plates/prongs 23 and 36 respectively, with their own driving devices, are used in the tool. The space in the tool where the plates/prongs shall be positioned decides how many of these can be introduced.

The control equipment and the driving of the injection moulding machine are used for controlling/driving the motions/forces of the plates/prongs 23 and 36 respectively, which in turn give motions/forces of the mould pressure cores and connection plunges. The different operations of the machine are co-ordinated with required operations of the process/the tool according to the invention, such as start and stop moments, speeds/forces for the plates/prongs 23 and 36 respectively, in such a manner that the desired process/tool function is obtained for the mould pressure cores and connection plunges. Typical operation/process procedures of the machine, which can give impulses for start and stop of operations in the process/ the tool, are "closing/locking of tool", "start of injection", "different positions for the reciprocating motion of the screw piston" and "change over to after-pressure". Furthermore it is possible to provide the guides for the mould pressure cores and connection plunges with time delay functions, which means that start and stop for the different operations in the tool can be delayed in relation to the moments when the impulses are received from the control system of the machine, which in turn means that the functions in the tool can be started/stopped at any moment during the process cycle. The motions, which via the driving devices for the plates/prongs, are transferred to the mould pressure cores and connection plunges, are received from the so called core stripping functions of the machine, the control of which has been programmed especially for the process/tool function according to the invention.

### THE BASIC CONCEPT. THE PROCESS PROCEDURE

The process procedure according to the basic concept of the invention is characterized in that it incorporates two main steps, which are made in the process cycle directly following after each other. Step 1 incorporates filling of the mould chamber of the upper part, whereas step 2 incorporates filling of the mould cavities of the connections and the after-pressure procedure.

### Step 1

### Process demands:

- Filling of multi-layer melt in the mould chamber of the upper part shall be "uniform" and "disturbance-free":
   * "Uniform" means that the flow front of the melt, will reach the outer contour of the mould chamber of the upper part at the same time around the entire mould chamber, whereby is obtained an optimal distribution, of about 25/75 % of surface and core material.
   * "Disturbance-free" means that as only the mould chamber of the upper part is filled during this step (the openings to the mould cavities of the connections are heavily restricted) it is obtained a simpler filling procedure, which promotes the quality of the upper part in different respects.
- A certain melt pressure shall be maintained at the final phase of the filling, and which shall be high enough and act under the time required for the upper part to obtain a high quality with respect to:
   * Reproduction of the structure of the mould surface (e.g. pattern or high finish surface).
   * Freedom for sinking, and
   * Uniform surface finish

### Tool machine function:

- Dosing of the surface material melt in the injection unit of the machine shall be adjusted so, that the amount of melt is just enough for the thin surface layer around the upper part. The core material melt shall be metered for being enough for the core layer of the upper part and for the entire material volume of the connections.
- The mould pressure cores shall be adjusted to different individual initial positions, thus that the distances between the mould walls at the shaping surfaces of the cores give different flow front speeds, which due to the substantially different lengths of the flow paths, are necessary for obtaining a "uniform" filling of the mould chamber of the upper part.
- The connection plunges, which can be displaced inwardly and backwardly in relation to the mould chamber of the upper part, shall be positioned in their rearward positions, which means that the openings of the mould cavities are heavily restricted. Hereby the multi-layer melt is prevented from running into the mould cavities, whereby a "disturbance-free" filling is obtained.
- The mould pressure cores can during the final phase of the filling in step 1, but also during the filling of the mould cavities of the connections during step 2, be given a motion, which at a certain speed and force act inwardly in the mould chamber of the upper part. This motion will give the following consequences during step 1:
   * The excess of melt at the mould pressure cores, the initial positions of which give material thicknesses, which generally are substantially bigger than the thicknesses according to the drawings, is pressed away by the mould pressure cores. Otherwise the material consumption should become unnecessary high, the cooling time longer and the quality of the product inferior. The amount of melt, which is pressed away in this phase of the filling, will give an addition/complement to the melt flow from the injection unit of the machine.
- The force from the mould pressure cores give furthermore a melt pressure which is higher and more uniformly distributed in the mould chamber of the upper part, in comparison with if it had been filled only by the injection unit of the machine, which in turn will give a product of better quality.

### Step 2

### Process demands:

- Filling of the mould cavities of the connections with only core material melt, i.e. this shall penetrate through the surface layer of the upper part.
- Switching to the after-pressure procedure which is a combination of the after-pressure procedures from the injection unit of the machine and from the mould pressure cores, which means that a higher and more uniform after-pressure is obtained in the entire mould chamber as compared to the situation if only the after-pressure from the injection unit should be utilized.

### Tool and machine function:

- The connection plunges are displaced backwards thus that the flow paths between the mould chamber and the mould cavities of the connections are opened.
- As all surface material melt has been used at the filling of the mould chamber of the upper part, the core material melt will penetrate the surface layer of the upper part at the openings of the mould cavities of the connections and begin to fill those.
- The motions of the mould pressure cores against the excess melt in the mould chamber of the upper part can be made also during step 2, or alternatively only during step 2, which in a manner like in step 1 will give an addition/complement to the melt flow from the injection unit of the machine at filling of the mould cavities of the connections.
- The mould cavities of the connections are finally filled only with core material melt.
- Switching to the after-pressure procedure has been described above. The mould pressure cores have during the after-pressure procedure made only the small motion, which corresponds the part of the compression of the melt, which is effected of the force of the cores on the melt.
- After terminated after-pressure and cooling procedures the product is expelled from the tool whereby the undercuts at the product at the transition from the upper part to the connections are exposed.

### OTHER PARTIAL CONCEPTS

### Injection moulding of multilayer products in two steps with slots as tearing notches

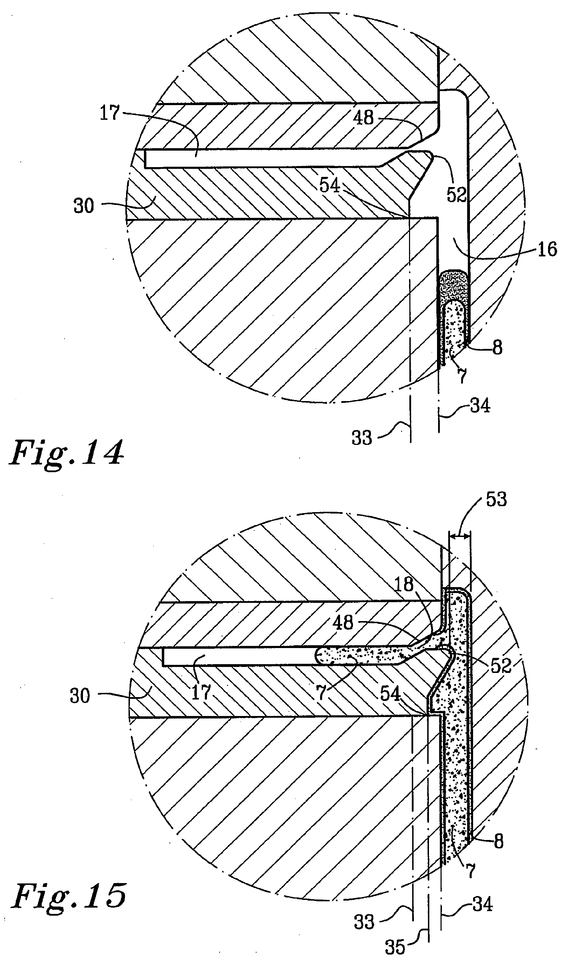

In Figs. 14 - 19 two alternative modifications of the tool according to the invention are illustrated in views corresponding to Figs. 11 - 13.

In Figs. 14 - 16 the connection core 30 along its entire extension in the mould chamber 16 of the upper part has been provided with a forward edge, shown as an apex 52. The edge is intended to shape the material in the upper part at the inward movement of the connection cores into the mould chamber, thus that a slot is formed in its rearward side. In Fig. 14 is shown the situation when the connection core 30 is situated in its rearmost position 33, where it restricts the opening towards the mould cavity 17. In this position the edge 52 is at a certain distance from its forward position in the mould chamber. In Fig. 15 is shown how the connection core 30 has been displaced a certain distance to position 35, corresponding to the position 34 of the core inwardly in the mould chamber 16, whereby a slit 53 has been formed at the apex 52, which slit allows melt to pass the edge. Also the flow channel 18 has been opened correspondingly, but as the flow resistance in the flow channel still is bigger than in the mould chamber 16, the multilayer melt will substantially fill out the mould chamber 16 before core material melt will flow into the mould cavity 17.

When also the mould cavity 17 has been filled with core material 7, or during the time this final filling takes place, the connection core 30 is pushed a further distance in forward direction to position 34, whereby the apex 52 will reach its end position near the mould chamber surface at the opposite side of the mould chamber 16, thereby pushing aside the plastic material, which has not yet become completely stiff, i.e. warm and soft, thus that a slot 55 is formed therein, which slot can serve as a tearing line, which after form stripping of the product from the tool permits a simple separation of the parts of the upper part situated on both sides of the tearing line. The edge 54 on the part of the connections core 30, which is situated below the apex has now reached and lies in plane with the adjacent surface in the mould chamber 16.

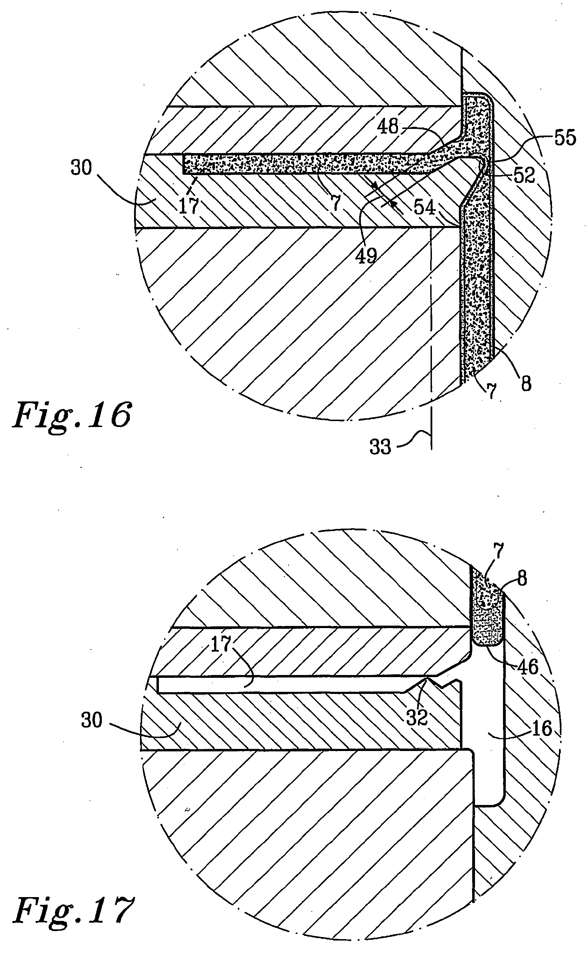

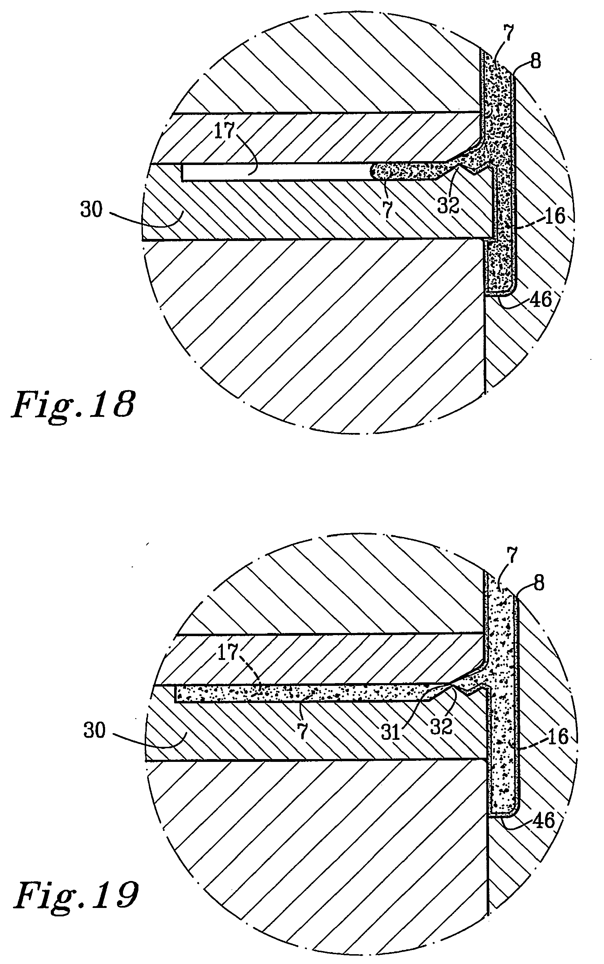

Figs. 17 - 19 show an alternative embodiment, whereby it is possible with the illustrated design of the front part of the connection cores 30 and with three partial movements of the cores, to form a slot 31, see Fig. 19, in the connections near the rearmost surface of the upper part. In contrast to the first alternative, the connection core has an initial position 33 where the edge 32 is situated a distance further backward in relation to the chamfer 48, and where the third movement step is effected a certain distance backwards from the intermediate position 35 to the final position 34.

### injection moulding of 1-material products in two steps

The two partial concepts described above can also be utilized for injection moulding 1-material products either by the "co-injection" method or in conventional injection moulding, in both cases with supplement of the control and driving functions of the machines for the process/tool function according to the invention. The surface layer and the core layer of the product in both cases will be constituted by the same material, and for this reason there is not achieved any material cost reduction, but better possibilities to obtain a higher product quality with reference for instance to surfaces, mechanical properties and form accuracy compared to injection moulding in conventional moulding tools.

At injection moulding of 1-material products in "co-injection" machines and tools according to the invention, it is for instance possible to heat the surface material melt to a higher temperature and thereby to a lower the viscosity, whereby a lower injection pressure can be used. The reduced viscosity of the surface material melt can alternatively be utilized for injection moulding of products having longer flow paths.

### Ijection moulding of cellular products in two steps with expanding material

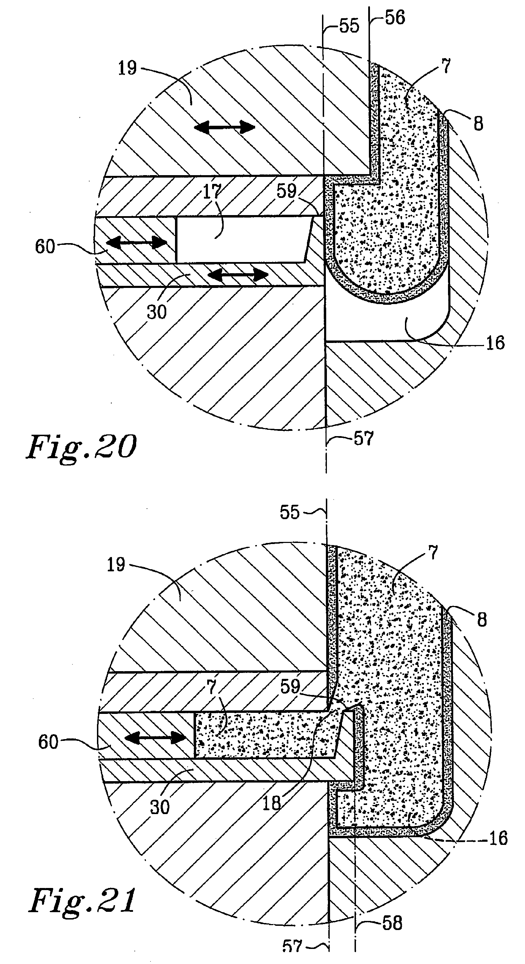

In Figs. 20 - 23 is shown in different views similar to that of Figs. 14 - 16 an embodiment suitable for injection moulding of expanding cellular thermo plastics by foaming. At injection moulding of expanding cellular thermoplastics, there will be a certain after-expansion after the stripping of the product from the tool, which depends on the fact that the driving gas for the expansion in the melt causes a internal pressure, which tends to continue the expansion of the material. The size of this after-expansion is dependent on, i. a. the stiffness and the strength of the plastic material at the temperature, which the product has at the stripping, and on the size of the internal pressure from the driving gas. At injection moulding of expanding soft thermoplastics, for instance thermoplastic elastomers, the after-expansion often is so large that the form and measure accuracy of the product will fall substantially outside the tolerances defined, whereas it at injection moulding of stiff thermoplastics often has no such effects.

In Fig. 20 is shown a part of the tool with the mould chamber 16, a movable mould pressure core 19 and a connections core 30, which also is movable. In the entire mould chamber there might be several mould pressure cores and connections cores. The mould pressure cores 19, the positions of which can be adjusted step-less from the rearward initial positions 55 to the forward positions 56, in this partial concept have a function to reduce the internal mould pressure and thereby to contribute in reducing the expansion of the cellular plastic material after form stripping. The connection core 30, which is designed in accordance with the earlier shown connection cores 30, have a portion 60, which is adjustable in a step-less manner in the direction of the arrows, and which forms the rearward end surface in the mould cavity 17 of the connections, and the volume of which thus can be chosen by means of this possibility of adjustment. In Fig. 20 the connections core is situated in the rearmost position in which the flow channel 18, shown in Fig. 21, is closed and thus no melt can flow into the mould cavity 17.

### Step 1

### Process demands:

- The cellular melt shall fill out the mould chamber completely and thereupon a certain inner mould pressure shall be maintained for a certain period of time. The inner mould pressure during this period of time shall be high enough to result in a good reproduction of the surface structure of the mould chamber and an even surface brightness of the product.

### Tool and machine function:

- Such as shown in Fig. 20 the mould pressure cores 19 during the filling are situated in their forward positions 56 and the connection cores 30 in their rearward positions 57, which means that the volume of the melt in the mould chamber is as small as possible. When the mould chamber has been completely filled from the injection unit of the machine and the desired inner mould pressure has been reached, the flow of melt through the nozzle of the injection unit is interrupted. Thereupon the inner mould pressure is maintained for a certain period of time until the surface quality of the product as defined above has been reached and stabilized.

### Step 2

### Process demands:

- The inner mould pressure shall be lowered so much that the residual pressure in the product will not result in an expansion of un-permitted size at the stripping.

### Tool and machine function:

- The lowering of the inner mould pressure is effected, as illustrated in Fig. 21, on one hand
   * in that the mould pressure cores 19 are displaced towards there rearward positions 55, whereby the cellular material expands and fills the increasing volume created at the movement of the cores, and on the other hand
   * in that the connection cores 30 are moved to their forward positions 58, whereby the flow channel 18 is opened and the volume of the mould cavities 17 will be accessible for being filled with melt from the core layer in the mould chamber after this has first penetrated the surface layer at the opening 18.
- The volume increase for the mould chamber, which is caused by the function of the mould pressure cores and the connection cores, shall be adjusted thus that the residual gas pressure in the product will not result in un-permitted expansion thereof at stripping.

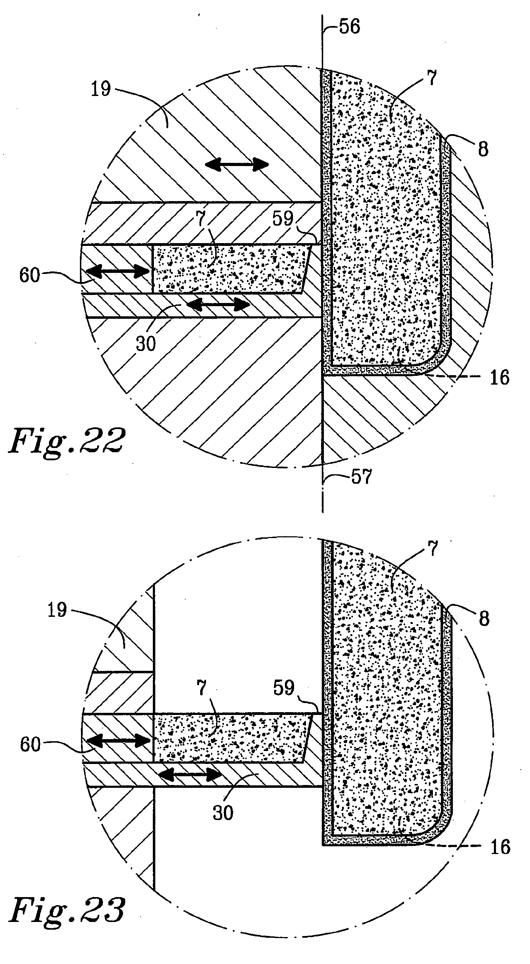

The movements of the mould pressure cores and the connection cores can be effected quite independent of each other.
- When the mould cavities 17 have been filled of melt, the connection cores 30 are retracted to their rearward positions 57 as shown in Fig. 22, whereby the product in the mould cavity 16 is separated from the connections 30 by the edge 59 of their forward end cutting off the plastic material in the flow channel 18.
- After cooling of the product for a required time and after the opening of the tool at the parting surfaces, such as shown in Fig. 23, the ejector plate stack of the tool displaces the connection cores in forward direction together with, for instance, ejector and stripper plate, whereby on one hand the product is stripped from the form and on the other hand the plastic material in the mould cavities 17 are exposed thus that they can be removed from the tool.

Cellular products of expanding plastics can be injection moulded with multi-layer, over-moulding and 1-material methods. The solution for reducing the after-expansion which is presented by the method can be used in anyone of these methods

## Claims

1. Method for injection moulding of product incorporating an upper part (11) and at least one connection integrated therewith, and where the mould chambers (16, 17) of the upper part and/or the connections have flow paths of different length in different directions from a melt intake (15), wherein
adjustable cores (19) in said mould chambers (16, 17) are individually adjustable for giving different flow resistance in different parts of the mould chambers for the purpose of ascertaining that the flow front of the melt will reach the outer contour of the mould chamber of the upper part substantially at the same time around the entire mold chamber and in that said method is performed using a tool comprising a combination of a fixed tool half (13), a movable tool half (14) incorporating mould pressure cores (19), which are arranged to be movable in a direction towards the mould chamber (16), which is in contact with a melt intake (15), mould cavities (17) for connections provided in movable connection cores (30), which mould cavities (17) are in contact with the mould chamber (16) via restrictable openings/flow channels (18).

2. Method as claimed in claim 1, wherein
the injection moulding is subdivided into two steps, whereby movable connection cores (30) in the first step are adjusted for restricting openings/flow channels (18) to the mould cavities (17) of the connections, thus that only the mould chamber (16) of the upper part is filled during this first step, whereas the movable connection cores (30) in the second step are displaced for opening the openings/flow channels (18) to the mould cavities (17) of the connections.

3. Method as claimed in anyone of the preceding claims for production of a two-layer product, wherein
melt of a material, which shall form the surface layer of the upper part, is metered thus that the amount of melt is carefully adapted to cover the entire surface of the upper part with a thin material layer.

4. Method as claimed in claim 3, wherein
for the second step is metered an amount of melt of a core material, having such a volume that this core material melt forms the core of the upper part and the entire volume of the connections.

5. Method as claimed in anyone of claims 3 to 4, wherein
the movable connection cores (30), which during the first step restricts the openings/flow channels (18) for the connections, during the second step are displaced to alternative positions where the openings/flow channels (18) are exposed, and thereby permits the core material melt to fill out also the connections, and that after filling of all core material in the interior of the mould chamber (16) of the upper part and in the connections is switched over to an after-pressure procedure.

6. Method as claimed in anyone of claims 1 and 2 for manufacture of 1-material product, wherein
it is metered melt of a single material, which shall form the entire upper part, and the entire connections, whereby the second step is initiated after the upper part has been completely filled of material melt.

7. Method as claimed in anyone of the preceding claims for manufacture of product having a tearing notch, wherein
the movable connection cores (30), which serve to restrict the openings/flow channels (18) of the connections during the first step, have been equipped with a forward edge (52), and that these movable connection cores first are moved inwardly into the mould chamber (16) for uncovering the openings/flow channels (18) of the connections, and thereafter during or after final filling of the mould cavities of the connections, to be moved further into the mould cavity (16), and thereby pushing aside the material which has not yet become completely stiff, thereby creating said tearing notch.

8. Tool for performing the method as claimed in anyone of the claims 1 to 7, comprising
a combination of a fixed tool half (13),
a movable tool half (14) incorporating mould pressure cores (19), which are arranged to be movable in a direction towards a mould chamber (16), which is in contact with a melt intake (15),
mould cavities (17) for connections provided in movable connection cores (30), which mould cavities (17) are in contact with the mould chamber (16) via restrictable openings/flow channels (18).

9. Tool as claimed in claim 8,
wherein
each one of the movable connection cores (30) is provided with a sloping forward end (47) adapted at the displacement of the connection core (30) between an initial position (33) and an end position (34), by means of cooperation with a corresponding chamfer on the mould pressure core, cause a restriction and opening respectively of the openings/flow channels (18) between the moulding chamber (16) and the mould cavities (17).

## Patentansprüche

1. Verfahren zum Spritzgießen eines Produkts, das einen oberen Teil (11) und wenigstens eine integrierte Verbindung damit umfasst und bei dem die Formkammern (16, 17) des oberen Teils und / oder die Verbindungen Fließwege unterschiedlicher Länge in unterschiedlichen Richtungen von einem Schmelzstromeinlass (15) haben, wobei anpassbare Kerne (19) in den genannten Formkammern (16, 17) individuell anpassbar sind, um unterschiedliche Strömungswiderstände in unterschiedlichen Teilen der Formkammern zum Zwecke der Vergewisserung ergeben, dass die Fließfront des Schmelzstroms die äußere Kontur der Formkammer des oberen Teils im Wesentlichen zu derselben Zeit rund um die gesamte Schmelzkammer erreichen wird und dass das genannte Verfahren unter Verwendung eines Werkzeugs durchgeführt wird, das eine Kombination aus einer festen Werkzeughälfte (13), einer beweglichen Werkzeughälfte (14), die Formdruckkerne (19) einschließt, die angeordnet sind, um in einer Richtung zu einer Formkammer (16) beweglich zu sein, die mit einem Schmelzstromeinlass (15) in Kontakt steht, Formvertiefungen (17) für Verbindungen umfasst, die in beweglichen Verbindungskernen (30) bereitgestellt sind, wobei die Formvertiefungen (17) mit der Formkammer (16) über verengbare Öffnungen / Fließkanäle (18) in Kontakt sind.

2. Verfahren gemäß Anspruch 1, bei dem das Spritzgießen in zwei Stufen unterteilt ist, wobei bewegliche Verbindungskerne (30) in der ersten Stufe zum Verengen von Öffnungen / Fließkanälen (18) zu den Formvertiefungen (17) der Verbindungen derart angepasst sind, dass nur die Formkammer (16) des oberen Teils während dieses ersten Schritts gefüllt wird, während die beweglichen Verbindungskerne (30) in dem zweiten Schritt zum Öffnen der Öffnungen / Fließkanäle (18) zu den Formvertiefungen (17) der Verbindungen verschoben werden.

3. Verfahren gemäß einem der voranstehenden Ansprüche zur Herstellung eines zweischichtigen Produkts, wobei der Schmelzstrom eines Materials, das die Oberflächenschicht des oberen Teils bilden soll, derart gemessen wird, dass die Menge des Materials sorgfältig angepasst ist, um die gesamte Oberfläche des oberen Teils mit einer dünnen Materialschicht abzudecken.

4. Verfahren gemäß Anspruch 3, bei dem für die zweite Stufe eine Menge Schmelzstrom eines Kernmaterials gemessen wird, das ein derartiges Volumen hat, dass dieses Kernmaterial den Kern des oberen Teils und das gesamte Volumen der Verbindungen bildet.

5. Verfahren gemäß Anspruch 3 bis 4, bei dem die beweglichen Verbindungskerne (30), die während der ersten Stufe die Öffnungen / Fließkanäle (18) für die Verbindungen verengen, während der zweiten Stufe in alternative Positionen verschoben werden, in denen die Öffnungen / Fließkanäle (18) freigelegt sind, und damit dem Kernmaterialschmelzstom das Ausfüllen ebenfalls der Verbindungen ermöglichen und dass nach dem Füllen des gesamten Kernmaterials im Innern der Formkammer (16) des oberen Teils und in den Verbindungen zu einem Nachdruckverfahren umgeschaltet wird.

6. Verfahren gemäß Anspruch 1 und 2 für die Herstellung eines 1-Materialprodukts, bei dem der Schmelzstrom eines einzigen Materials, das den gesamten oberen Teil bilden soll, und die gesamten Verbindungen gemessen werden, wodurch die zweite Stufe initiiert wird, nachdem der obere Teil komplett mit Materialschmelze ausgefüllt ist.

7. Verfahren gemäß einem der voranstehenden Ansprüche zur Herstellung eines Produkts mit einer Abreißkerbe, bei dem die beweglichen Verbindungskerne (30), die zum Verengen der Öffnungen / Fließkanäle (18) der Verbindungen während der ersten Stufe dienen, mit einem vorderen Rand (52) ausgerüstet sind und dass diese beweglichen Verbindungskerne zuerst einwärts in die Formkammer (16) zum Aufdecken der Öffnungen / Fließkanäle (18) der Verbindungen bewegt werden und danach während des endgültigen Füllens der Formvertiefungen der Verbindungen oder danach weiter in die Formvertiefung (16) bewegt werden und damit das Material zur Seite schieben, das noch nicht komplett steif geworden ist und damit die genannte Abreißkerbe herstellen.

8. Werkzeug zur Durchführung des Verfahrens gemäß einem der Ansprüche 1 bis 7, das eine Kombination aus einer festen Werkzeughälfte (13), einer beweglichen Werkzeughälfte (14), die Formdruckkerne (19) einschließt, welche angeordnet sind, um in einer Richtung zu einer Formkammer (16) beweglich zu sein, die mit einem Schmelzstromeinlass (15) in Kontakt steht, Formvertiefungen (17) für Verbindungen umfasst, die in beweglichen Verbindungskernen (30) bereitgestellt sind, wobei die Formvertiefungen (17) mit der Formkammer (16) über verengbare Öffnungen / Fließkanäle (18) in Kontakt sind.

9. Werkzeug gemäß Anspruch 8, bei dem jeder der beweglichen Verbindungskerne (30) mit einer abfallenden vorderen Kante (47) bereitgestellt ist, die an das Verschieben des Verbindungskerns (30) zwischen einer Ausgangsposition (33) und einer Endposition (34) mittels eines Zusammenwirkens mit einer entsprechenden Abfasung auf dem Schmelzdruckkern jeweils eine Verengung und Öffnung der Öffnungen / Fließkanäle (18) zwischen der Formkammer (16) und den Schmelzvertiefungen (17) bewirken.

## Revendications

1. Procédé de moulage par injection de produit incorporant une partie supérieure (11) et au moins un raccordement intégré à celle-ci, et où les chambres de moule (16, 17) de la partie supérieure et/ou les raccordements ont des chemins d'écoulement de longueur différente dans des directions différentes à partir d'une entrée de coulée (15), dans lequel
des noyaux réglables (19) dans lesdites chambres de moule (16, 17) sont réglables individuellement pour donner une résistance d'écoulement différente dans des parties différentes des chambres de moule dans le but de vérifier que le front d'écoulement de la coulée atteindra le contour extérieur de la chambre de moule de la partie supérieure sensiblement en même temps autour de la chambre de moule entière et ledit procédé est effectué en utilisant un outil comprenant une combinaison d'une moitié d'outil fixe (13), d'une moitié d'outil mobile (14) incorporant des noyaux de pression de moule (19), qui sont agencés pour être mobiles dans un sens vers la chambre de moule (16), qui est en contact avec une entrée de coulée (15), des cavités de moule (17) pour des raccordements prévus dans des noyaux de raccordement mobiles (30), lesquelles cavités de moule (17) sont en contact avec la chambre de moule (16) via des ouvertures / canaux d'écoulement restrictifs (18).

2. Procédé selon la revendication 1, dans lequel
le moulage par injection est subdivisé en deux étapes, de sorte que des noyaux de raccordement mobiles (30) dans la première étape sont réglés pour limiter des ouvertures / canaux d'écoulement (18) jusqu'aux cavités de moule (17) des raccordements, ainsi seulement la chambre de moule (16) de la partie supérieure est remplie pendant cette première étape, tandis que les noyaux de raccordement mobiles (30) dans la seconde étape sont déplacés pour ouvrir les ouvertures / canaux d'écoulement (18) jusqu'aux cavités de moule (17) des raccordements.

3. Procédé selon l'une quelconque des revendications précédentes pour la production d'un produit à deux couches, dans lequel
une coulée d'une matière, qui formera la couche superficielle de la partie supérieure, est mesurée ainsi que la quantité de coulée qui est soigneusement adaptée pour couvrir la surface entière de la partie supérieure avec une fine couche de matière.

4. Procédé selon la revendication 3, dans lequel
pour la seconde étape on mesure une quantité de coulée d'une matière de noyau, ayant un volume tel que cette coulée de matière de noyau forme le noyau de la partie supérieure et le volume entier des raccordements.

5. Procédé selon l'une quelconque des revendications 3 à 4, dans lequel
les noyaux de raccordement mobiles (30) qui pendant la première étape limitent les ouvertures / canaux d'écoulement (18) pour les raccordements, sont déplacés pendant la seconde étape jusqu'à d'autres positions où les ouvertures / canaux d'écoulement (18) sont exposés, et permettent de ce fait à la coulée de matière de noyau de remplir également les raccordements, et après cela le remplissage de toute la matière de noyau dans l'intérieur de la chambre de moule (16) de la partie supérieure et dans les raccordements est commuté sur une procédure après-pression.

6. Procédé selon l'une quelconque des revendications 1 et 2 pour la fabrication de produit à 1 matière, dans lequel
on mesure une coulée d'une matière unique, qui formera la partie supérieure entière, et les raccordements entiers, de sorte que la seconde étape est amorcée après que la partie supérieure a été complètement remplie de coulée de matière.

7. Procédé selon l'une quelconque des revendications précédentes pour la fabrication de produit ayant une encoche de déchirement, dans lequel
les noyaux de raccordement mobiles (30), qui servent à limiter les ouvertures / canaux d'écoulement (18) des raccordements pendant la première étape, ont été équipés d'un bord avant (52), et
ces noyaux de raccordement mobiles sont d'abord déplacés vers l'intérieur dans la chambre de moule (16) pour découvrir les ouvertures / canaux d'écoulement (18) des raccordements, et après cela pendant ou après le remplissage final des cavités de moule des raccordements, être déplacés davantage dans la cavité de moule (16), et poussant de ce fait à l'écart la matière qui n'est pas encore devenue complètement solidifiée, créant de ce fait ladite encoche de déchirement.

8. Outil pour effectuer le procédé selon l'une quelconque des revendications 1 à 7, comprenant :
une combinaison d'une moitié d'outil fixe (13),
d'une moitié d'outil mobile (14) incorporant des noyaux de pression de moule (19), qui sont agencés pour être mobiles dans un sens vers une chambre de moule (16), qui est en contact avec une entrée de coulée (15),
des cavités de moule (17) pour des raccordements fournis dans des noyaux de raccordement mobiles (30), lesquelles cavités de moule (17) sont en contact avec la chambre de moule (16) via des ouvertures / canaux d'écoulement restrictifs (18).

9. Outil selon la revendication 8, dans lequel
chacun des noyaux de raccordement mobiles (30) est muni d'une extrémité avant en déclive (47) adaptée au déplacement du noyau de raccordement (30) entre une position initiale (33) et une position d'extrémité (34), au moyen de la coopération avec un chanfrein correspondant sur le noyau de pression de moule, provoquant respectivement une restriction et l'ouverture des ouvertures / canaux d'écoulement (18) entre la chambre de moulage (16) et les cavités de moule (17).
